# EUROPÄISCHE PATENTANMELDUNG

(11) **EP 3 459 834 A1**
(43) Veröffentlichungstag der Anmeldung: **27.03.2019**
(21) Anmeldenummer: 18196246.5
(22) Anmeldetag: 24.09.2018
(51) Int. Cl.: B62K 11/00

(54) **DYNAMISCH BALANCIERENDES FAHRZEUG**

(30) Priorität: 26.09.2017 DE 102017217103; 08.12.2017 DE 102017222318
(71) Anmelder: Maurer, Armin, 71404 Korb (DE); Maurer, Cornelia, 71404 Korb (DE); Bernhard, Uwe, 71522 Backnang (DE)
(72) Erfinder: Maurer, Armin, 71404 Korb (DE)
(74) Vertreter: BRP Renaud & Partner mbB Rechtsanwälte Patentanwälte Steuerberater

(57) **Zusammenfassung**

Die vorliegende Erfindung betrifft ein dynamisch balancierendes Fahrzeug (1), das ein Fahrgestell (2), das mit wenigstens zwei mittels Elektromotor (8) angetriebene, um eine gemeinsame Raddrehachse (6) drehbare Räder (5) ausgestattet ist, einen auf dem Fahrgestell (2) angeordneten Fahrzeugsitz (10), eine Steuereinrichtung (9) zum Ansteuern der Elektromotoren (8) zum Balancieren, Beschleunigen, Bremsen und Lenken des Fahrzeugs (1), und ein an einer Vorderseite (12) des Fahrgestells (2) eine Fußstütze (11) aufweist.

Die Stabilität des Fahrbetriebs des Fahrzeugs (1) lässt sich verbessern, wenn der Fahrzeugsitz (10) und die Fußstütze (11) relativ zum Fahrgestell (2) beweglich angeordnet sind und wenn eine Wippe (17) um eine parallel zur Raddrehachse (6) verlaufende Wippenschwenkachse (18) schwenkbar am Fahrgestell (2) angeordnet ist, die die Fußstütze (11) und den Fahrzeugsitz (10) zum Ausgleich von Drehmomenten um die Wippenschwenkachse (18) koppelt.

## Beschreibung

Die vorliegende Erfindung betrifft ein dynamisch balancierendes Fahrzeug mit den Merkmalen des Oberbegriffs des Anspruchs 1.

Ein dynamisch balancierendes Fahrzeug besitzt im Allgemeinen jedenfalls ein Fahrgestell, das über wenigstens ein Rad auf einem Untergrund abgestützt ist, einen Antrieb zum Antreiben des wenigstens einen Rads, eine Neigungssensorik und eine Steuereinrichtung. Diese Fahrzeuge werden entweder mit nur einem einzigen Rad oder mit mehreren Rädern, bevorzugt mit genau zwei Rädern, verwendet, die dann jedoch um eine gemeinsame Raddrehachse drehen, die sich parallel zu einer Fahrzeugquerachse erstreckt. Üblicherweise besitzt das Fahrgestell eine Trittfläche, auf die ein Fahrzeugführer stehen kann. Die Steuerungseinrichtung steuert den jeweiligen Antrieb so an, dass das Fahrzeug selbsttätig ausbalanciert wird. Hierzu wird unter anderem ein Neigungswinkel der Fahrzeuglängsachse gegenüber einer sich senkrecht zur Gravitationsrichtung erstreckenden Horizontalebene ermittelt. Die Steuerungseinrichtung versucht nun permanent durch entsprechende Ansteuerung des Antriebs, diesen Neigungswinkel auf den Wert Null zurückzustellen. Der Fahrzeugführer kann nun durch Verlagern seines Körperschwerpunktes die Neigung des Fahrgestells gegenüber der Horizontalebene verändern, wodurch es je nach Neigungswinkel zu einer Beschleunigung oder zu einem Abbremsen des Fahrzeugs kommt.

Bei einem solchen Fahrzeug, das genau zwei Räder aufweist, die um eine gemeinsame Raddrehachse rotieren, ist für jedes Rad ein separater Antrieb vorgesehen. Ferner ist üblicherweise eine Lenkeinrichtung zum Erzeugen von Lenkbefehlen vorgesehen. Je nach Lenkbefehl können die Antriebe für die beiden Räder unterschiedlich betätigt werden, wodurch sich eine entsprechende Lenkbetätigung des Fahrzeugs ergibt. Eine derartige Lenkeinrichtung kann beispielsweise eine vom Fahrzeugführer betätigbare Lenkstange aufweisen, die über ein Lenklager am Fahrgestell um eine parallel zu einer Fahrzeuglängsachse verlaufende Lenkachse schwenkbar gelagert ist. Zusätzlich oder alternativ kann auch ein Joystick zur Lenkbetätigung des Fahrzeugs vorgesehen sein.

Bekannt geworden sind derartige dynamisch balancierende Fahrzeuge für stehende Fahrzeugführer unter der Bezeichnung "Segway" des Herstellers Segway Incorporated.

Aus der US 8 201 653 B2 ist ein dynamisch balancierendes Fahrzeug bekannt, das jedoch anstelle eines Trittbretts mit Trittfläche für einen stehenden Fahrzeugführer oder zusätzlich dazu mit einem Fahrzeugsitz ausgestattet ist, auf dem der Fahrzeugführer Platz nehmen kann. Der Fahrzeugsitz ist dabei auf dem Fahrgestell angeordnet, das zumindest zwei mittels Elektromotor angetriebene Räder aufweist, die um eine gemeinsame Drehachse drehbar sind. Eine Steuereinrichtung dient zum Ansteuern der Elektromotoren, um das Fahrzeug zu balancieren, zu beschleunigen, zu bremsen und zu lenken. Es ist klar, dass eine mit der Steuereinrichtung kommunizierende Neigungssensorik vorhanden ist, mit deren Hilfe die für das Balancieren, das Beschleunigen und das Bremsen erforderlichen Steuersignale erzeugt werden können. Die Steuereinrichtung steuert dann die Elektromotoren in Abhängigkeit dieser Steuersignale auf geeignete Weise zum Balancieren, zum Beschleunigen und zum Bremsen des Fahrzeugs an.

Da bei einem sitzenden Fahrzeugführer der Körperschwerpunkt sehr viel niedriger ist als bei stehendem Fahrzeugführer, wirkt sich eine Verlagerung des Körperschwerpunkts weniger deutlich auf den Fahrzeugschwerpunkt und somit deutlich weniger auf den Neigungswinkel des Fahrzeugs aus. Außerdem ist bei einem sitzenden Fahrzeugführer im Wesentlichen nur noch der Oberkörper beweglich, um den Körperschwerpunkt und damit den Fahrzeugschwerpunkt zu verändern. Dementsprechend ist die Verlagerung des Körperschwerpunkts und somit die Beeinflussung des Neigungswinkels bei einem derartigen dynamisch balancierenden Fahrzeug mit Fahrzeugsitz erheblich reduziert. Um hier Abhilfe zu schaffen, ist beim bekannten Fahrzeug vorgesehen, den Fahrzeugsitz am Fahrgestell in der Fahrzeuglängsachse verstellbar anzubringen. Hierdurch kann der Fahrzeugführer seinen Körperschwerpunkt deutlich besser verlagern, wodurch die Beeinflussung des Neigungswinkels entsprechend verstärkt wird. In der Folge reagiert das Fahrzeug mit erhöhter Dynamik.

Um den Fahrzeugsitz nun relativ zum Fahrgestell bewegen zu können, ist aus der WO 2011/106767 A2 ein anderes dynamisch balancierendes Fahrzeug mit Fahrzeugsitz bekannt, das mit einer Hebelanordnung ausgestattet ist, die einen Haupthebel mit Handgriff und einen Zusatzhebel umfasst. Der Haupthebel trägt an seinem oberen Ende den Handgriff und ist an seinem unteren Ende gelenkig mit einer Fußstütze verbunden, die fest am Fahrgestell angebracht ist und die zum Aufstellen der Füße des sitzenden Fahrzeugführers dient. Der Zusatzhebel verbindet nun den Haupthebel zwischen dessen Enden mit dem Fahrzeugsitz. Durch Ziehen und Drücken am Handgriff kann der Fahrzeugführer sich mitsamt dem Fahrzeugsitz nach vorn bzw. nach hinten verlagern, was eine entsprechende Schwerpunktveränderung mit sich bringt. Hierbei werden alle vom Fahrzeugführer in den Haupthebel eingeleiteten Kräfte von der Lagerung an der Fußstütze aufgenommen, wodurch die Fußstütze besonders hohen Belastungen ausgesetzt ist.

Aus der JP 2007-186184 A ist ein weiteres balancierendes Fahrzeug mit Fahrzeugsitz bekannt, das mit einem Joystick zum Steuern des Fahrzeugs ausgestattet ist. Das Fahrgestell ist mit einem Sitzträger ausgestattet, auf dem eine Sitzeinheit aus Fahrzeugsitz, Fußstütze und Rückenlehne fest angeordnet ist. Dieser Sitzträger ist mittig über seitliche Vertikalträger jeweils mit einem Elektromotor zum Antreiben je eines Rads verbunden. Der jeweilige Vertikalträger ist dabei um eine parallel zur Raddrehachse verlaufende Kippachse am Sitzträger schwenkbar angeordnet. Vorne ist der Sitzträger über seitliche Linearaktuatoren mit je einem unteren Ende des jeweiligen Vertikalträgers verbunden. Die Länge der elektrischen Linearaktuatoren lässt sich mithilfe des Joysticks verändern. Ein Verändern der Länge der Aktuatoren bewirkt ein Verschwenken des Sitzträgers um die Kippachse und erzeugt dadurch eine Längsverschiebung des Fahrzeugschwerpunkts, was zu einem Beschleunigen oder zu einem Bremsen des Fahrzeugs führt. Das bekannte Fahrzeug ist außerdem mit einem Notstützrad ausgestattet, das aus einer neutralen Ruheposition heraus nach vorn oder nach hintern verschwenkbar ist, um das Fahrzeug im Notfall nach vorn oder nach hinten am Untergrund abstützen zu können.

Ein gattungsgemäßes Fahrzeug ist aus der DE 10 2015 217 327 A1 bekannt. Es ist mit einem Fahrgestell ausgestattet, das wenigstens zwei mittels Elektromotor angetriebene Räder aufweist, die um eine gemeinsame Raddrehachse drehbar sind. Auf dem Fahrgestell ist ein Fahrzeugsitz angeordnet. Ferner ist eine Steuereinrichtung zum Ansteuern der Elektromotoren zum Balancieren, Beschleunigen, Bremsen und Lenken des Fahrzeugs vorgesehen. Es ist klar, dass ein solches gattungsgemäßes Fahrzeug auch eine Neigungssensorik und eine Lenkeinrichtung aufweisen kann.

Bei auf dem Fahrzeugsitz sitzendem Fahrzeugführer ergibt sich eine andere Massenverteilung innerhalb des Fahrzeugs als bei einem auf einem Trittbrett stehenden Fahrzeugführer. Die räumliche Massenverteilung beeinflusst die Trägheit des Fahrzeugs bezüglich der Raddrehachse, was sich insbesondere auf die Balancefähigkeit des Fahrzeugs auswirken kann. Dies wird in besonderer Weise dann deutlich, wenn das Fahrzeug zusätzlich an einer Vorderseite des Fahrgestells mit einer Fußstütze ausgestattet ist, auf der ein auf dem Fahrzeugsitz sitzender Fahrzeugführer seine Füße abstellen kann. Hierdurch vergrößert sich die Massenträgheit des Fahrzeugs signifikant. In der Folge besteht die Gefahr, dass das Fahrzeug bei konstanter Geschwindigkeit und bei einem Gefälle, insbesondere bei langsamer Fahrt, etwa im Bereich der Schrittgeschwindigkeit, in Schwingungen um die Raddrehachse gerät. Im Resonanzfall können diese Schwingungen vergleichsweise große Amplituden erreichen, was für den Fahrzeugführer unkomfortabel ist. Im Extremfall kann das Fahrzeug dabei Schaden nehmen. Ebenso lassen sich dann Fahrfehler und Unfälle nicht mehr ausschließen.

Die vorliegende Erfindung beschäftigt sich mit dem Problem, für ein derartiges dynamisch balancierendes Fahrzeug eine verbesserte Ausführungsform anzugeben, die sich insbesondere dadurch auszeichnet, dass die Schwingungsneigung während des Fahrbetriebs reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Fahrzeugsitz und die Fußstütze miteinander so zu koppeln, dass sich die gegendrehenden Drehmomente nach Art einer Waage oder Schaukel am Fahrgestell ausgleichen. Hierzu können Fahrzeugsitz und Fußstütze am Fahrgestell die Drehmomente um eine gemeinsame Schwenkachse erzeugen, die im Folgenden als Wippenschwenkachse bezeichnet wird. Zu diesem Zweck sind Fahrzeugsitz und Fußstütze über eine Wippe oder Wippeneinrichtung miteinander gekoppelt oder bilden selbst besagte Wippe, wobei die Wippe die um die Wippenschwenkachse am Fahrgestell schwenkbar gelagert ist. Die Wippe ist dabei gleichzeitig in der Wippenschwenkachse am Fahrgestellt abgestützt. Die Kopplung von Fußstütze und Fahrzeugsitz erfolgt zum Ausgleichen von Drehmomenten um die Wippenschwenkachse. Gewichtskräfte an der Fußstütze erzeugen um die Wippenschenkachse ein nach vorn drehendes Drehmoment. Gewichtskräfte am Fahrzeugsitz erzeugen um die Wippenschwenkachse ein nach hinten drehendes Drehmoment. Durch die Drehmoment ausgleichende Kopplung von Fußstütze und Fahrzeugsitz kann der Fahrzeugführer, wenn er auf dem Fahrzeugsitz und der Fußstütze Platz genommen hat, sein Gewicht bezüglich der Wippenschwenkachse ausbalancieren. Für das Fahrzeug bedeutet dies, dass im Wesentlichen das gesamte Gewicht des Fahrzeugführers zentral über die Wippenschwenkachse in das Fahrgestell eingeleitet wird. Fahrzeugsitz und Fußstütze bilden durch bzw. mit der Wippe quasi eine Schaukel oder Waage bezüglich der Wippenschwenkachse. Ein diese Schaukel nach hinten kippendes Drehmoment, das durch die auf den Fahrzeugsitz einwirkende Gewichtskraft erzeugt wird, wird dabei durch ein diese Schaukel nach vorn kippendes Drehmoment, das durch die an der Fußstütze wirkende Gewichtskraft erzeugt wird, kompensiert. Insoweit lassen sich durch die Schaukel Drehmomente bezüglich der Wippenschwenkachse ausbalancieren bzw. ausgleichen. Die Wippe nimmt über den Fahrzeugsitz und die Fußstütze eingeleitete Vertikalkräfte auf und stützt diese in der Wippenschwenkachse, z.B. über ein entsprechendes Wippenlager, vertikal am Fahrgestell ab. Hierdurch lassen sich die gegendrehenden und sich insoweit kompensierenden Drehmomente erzeugen.

Es hat sich gezeigt, dass sich das erfindungsgemäße Fahrzeug extrem ruhig und quasi ohne Schwingungstendenz fahren lässt, wenn der Fahrzeugführer die besagte Schaukel ausbalanciert hat. Dies trifft insbesondere auch für den Fall zu, dass das Fahrzeug mit konstanter und niedriger Geschwindigkeit entlang eines Gefälles fährt. Dieser vorteilhafte Effekt wird darauf zurückgeführt, dass durch die beschriebene Schaukel Trägheitsmomente um die Raddrehachse signifikant reduziert werden können. Derartige Trägheitsmomente können insbesondere bei langsamer Fahrt entlang eines Gefälles, beispielsweise aufgrund eines Spiels im Antriebsstrang und/oder durch ein periodisches Wechseln von Schubbetrieb und Bremsbetrieb der Elektromotoren, besagte Schwingungen auslösen. Beim Beschleunigen und beim Bremsen entstehen diese Schwingungen dagegen kaum. Durch die Schaukel ergibt sich eine ähnliche Gewichtsverteilung am Fahrzeug, wie sie auch bei einem auf dem Trittbrett stehenden Fahrzeugführer auftritt. Und bei stehendem Fahrzeugführer wurde das Auftreten derartiger Schwingungen bisher nicht beobachtet.

Zur Realisierung dieser Schaukel schlägt die Erfindung vor, den Fahrzeugsitz und die Fußstütze relativ zum Fahrgestell beweglich anzuordnen und als Wippe auszugestalten bzw. über eine Wippe miteinander zu koppeln. Diese Wippe ist dabei um die parallel zur Raddrehachse verlaufende Wippenschwenkachse schwenkbar am Fahrgestell angeordnet und abgestützt. Die Wippe ist dabei so konzipiert, dass sie die Fußstütze und den Fahrzeugsitz zum Ausgleich von Drehmomenten um die Wippenschwenkachse koppelt. Vorwärts kippende Drehmomente, die an der Fußstütze eingeleitet werden, werden durch rückwärts kippende Drehmomente ausgeglichen, die am Fahrzeugsitz eingeleitet werden. Hierzu ist die Wippenschwenkachse bezüglich der Fahrzeuglängsachse zwischen einem an der Fußstütze angeordneten vorderen Krafteinleitzentrum und einem am Fahrzeugsitz angeordneten hinteren Krafteinleitzentrum angeordnet. Das jeweilige Krafteinleitzentrum ist ein gedachter Punkt, der die tatsächliche flächige Krafteinleitung durch die Füße an der Fußstütze und durch das Gesäß am Fahrzeugsitz ersetzt.

Besonders effizient ist dabei eine Ausführungsform, bei der die Wippe mit Fußstütze und Fahrzeugsitz so um die Wippenschwenkachse am Fahrgestell verschwenkbar gelagert ist, dass ein Verschwenken der Wippe mit Fußstütze und Fahrzeugsitz um die Wippenschwenkachse um kleinere Winkel, die in einem Neutralbereich, der eine ausbalancierte Neutrallage der Wippe enthält, liegen, ohne eine die Neigung des Fahrgestells verändernde Drehmomentübertragung zwischen Wippe und Fahrgestell erfolgt. Im Unterschied dazu bewirkt ein Verschwenken der Wippe mit Fußstütze und Fahrzeugsitz um die Wippenschwenkachse um größere Winkel, die außerhalb des Neutralbereichs liegen, eine Drehmomentübertragung zwischen Wippe und Fahrgestell zur Neigungsverstellung des Fahrgestells. Die Neigung des Fahrgestells ist dabei durch den Neigungswinkel zwischen der Fahrgestelllängsrichtung und der Horizontalen definiert. Bei aktivem Balancemodus des Fahrzeugs führt eine Veränderung der Neigung, also des Neigungswinkels des Fahrgestells zu einem Beschleunigen bei positiver Neigung und zu einem Abbremsen bei negativer Neigung. Das bedeutet, dass der Fahrzeugführer innerhalb des Neutralbereichs mit der Wippe um die Wippenschwenkachse wippen kann, ohne ein Beschleunigen oder Abbremsen des Fahrzeugs zu bewirken. Erst wenn das Wippen Winkelwerte außerhalb des Neutralbereichs erreicht, wirkt sich dies auf die Neigung des Fahrgestells aus und hat eine Beschleunigung oder ein Abbremsen zur Folge.

Zweckmäßig kann der Neutralbereich durch Anschläge begrenzt bzw. definiert sein, in denen die Wippe zur Drehmomentübertragung mit dem Fahrgestell zusammenwirkt. An den Grenzen des Neutralbereichs kommt die Wippe mit dem jeweiligen Anschlag zur Kraftübertragung in Kontakt und kann dadurch Kräfte auf das Fahrgestell übertragen und somit Drehmomente in das Fahrgestell einleiten. Der Neutralbereich kann relativ klein sein und beispielsweise nur wenige Winkelgrade umfassen oder sogar im Wesentlichen nur die Neutrallage umfassen, wenn beispielsweise ein elastische Anschlag verwendet wird. Bevorzugt ist jedoch ein gewisser Freilauf bevor die Wippe aus der Neutrallage heraus mit dem jeweiligen Anschlag in Kontakt kommt.

Mit anderen Worten, die Wippe dient nicht zum Längsverschieben des Fahrzeugschwerpunkts, was dynamisch zu einem Bremsen oder Beschleunigen des Fahrzeugs führen würde. Vielmehr soll durch Ausbalancieren der Wippe ein statischer Zustand herbeigeführt werden, bei dem das Fahrzeug mit konstanter Geschwindigkeit fährt. Es ist klar, dass die Wippe nicht beliebig weit nach vorn bzw. nach hinten relativ zum Fahrgestell verschwenken kann, da dann eine Längsverschiebung des Fahrzeugschwerpunkts nicht mehr möglich wäre und das Fahrzeug nicht mehr durch eine Schwerpunktverlagerung steuerbar wäre. Allerdings ermöglicht die Wippe zumindest im Bereich einer ausbalancierten Neutrallage oder Mittellage der Wippe ein gekoppeltes Verstellen von Fahrzeugsitz und Fußstütze relativ zum Fahrgestell, ohne dabei den Schwerpunkt des Fahrzeugs in der Fahrzeuglängsrichtung zu verändern. Zum Beschleunigen oder Bremsen des Fahrzeugs kann die Wippe z.B. gegen einen am Fahrgestell vorgesehenen vorderen bzw. hinteren Anschlag verschwenken, um so das Fahrgestell um die Raddrehachse zu verschwenken, was dann eine Längsverstellung des Fahrzeugschwerpunkts bewirkt und dynamisch von der Steuereinrichtung durch Beschleunigen bzw. Bremsen der Räder ausgeglichen wird. Zusätzlich kann der Fahrzeugführer auch an einer bevorzugt vorhandenen Lenkstange ziehen oder drücken, um direkt ein Verschwenken des Fahrgestells um die Raddrehachse herbeizuführen.

Es ist klar, dass der gegebenenfalls vorhandene Anschlag bevorzugt gedämpft bzw. als Dämpfer ausgestaltet sein kann, beispielsweise um einen harten Aufprall, Beschädigungen und Störgeräusche zu vermeiden. Auch kann dadurch ein abrupter Übergang an den Grenzen des Neutralbereichs zwischen einem Zustand ohne Drehmomentübertragung und einem Zustand ohne Drehmomentübertragung vermieden werden.

Im vorliegenden Zusammenhang beziehen sich die relativen Ortsangaben "vorne" und "hinten" auf eine Fahrzeuglängsachse des Fahrzeugs. Diese Fahrzeuglängsachse erstreckt sich senkrecht zur Raddrehachse und horizontal bei horizontal ausbalanciertem Fahrzeug. Die relativen Ortsangaben "unten" und "oben" beziehen sich auf das horizontal ausbalancierte Fahrzeug, in der eine Hochachse des Fahrzeugs vertikal verläuft. Oben ist dann von einem Untergrund, auf dem das Fahrzeug steht oder fährt, weggerichtet, während unten dem Untergrund zugewandt ist.

Gemäß einer vorteilhaften Ausführungsform kann die Wippe die Fußstütze so mit dem Fahrzeugsitz koppeln, dass eine den Fahrzeugsitz nach unten drückende Kraft eine die Fußstütze nach oben drückende Gegenkraft erzeugt. Auf diese Weise kann der auf dem Fahrzeugsitz sitzende Fahrzeugführer das Gewicht seiner Beine, die über die Füße auf der Fußstütze abgestellt sind, ausgleichen.

Entsprechend einer besonders vorteilhaften Ausführungsform ist die Wippe um die Wippenschwenkachse antriebslos schwenkbar am Fahrgestell angeordnet. Das bedeutet, dass kein elektrischer oder sonstiger Antrieb oder Aktuator zum Verschwenken der Wippe vorgesehen ist. Das Verschwenken soll ausschließlich durch die Sitzposition des Fahrzeugführers erfolgen. Für einen statischen bzw. stationären Betrieb des Fahrzeugs balanciert der Fahrzeugführer durch Verlagern seines Körperschwerpunkts die Wippe relativ zum Fahrgestell aus. Zweckmäßig ist eine Ausführungsform, bei welcher das Fahrgestell einen Fahrgestellkörper aufweist, an dem die Räder gelagert sind und an dem der jeweilige Elektromotor Drehmomente zum Antreiben des jeweiligen Rads abstützt, wobei die Wippe relativ zu diesem Fahrgestellkörper um die Wippenschwenkachse verschwenkbar am Fahrgestell angeordnet ist. Hierdurch wird die Struktur des Fahrgestells vereinfacht. Insbesondere können auch eine Steuerelektronik und zumindest eine Batterie zur Stromversorgung des jeweiligen Elektromotors in oder an diesem Fahrgestellkörper untergebracht sein. Der Fahrgestellkörper kann beispielsweise als Wanne ausgestaltet sein.

Eine andere Ausführungsform schlägt vor, dass der Fahrzeugsitz und die Fußstütze jeweils insgesamt oder zumindest im Bereich der Verbindung mit der Wippe relativ zum Fahrgestell nach oben bzw. nach unten, also entlang der Hochachse des Fahrzeugs verstellbar angeordnet sind, wobei dann die Wippe die Fußstütze so mit dem Fahrzeugsitz koppelt, dass eine Verstellung des Fahrzeugsitzes nach unten eine Verstellung der Fußstütze nach oben bewirkt, jeweils relativ zum Fahrgestell. Hierdurch wird die vorstehend genannte Schaukelfunktion realisiert. Der Fahrzeugsitz, die Fußstütze und die Wippe können dann die Schaukel bilden, die relativ zum Fahrgestell um die Wippenschwenkachse schaukelt bzw. schwenkbar angeordnet ist.

Grundsätzlich kann die Wippenschwenkachse unterhalb der Raddrehachse angeordnet sein. Eine bevorzugte Ausführungsform schlägt jedoch vor, die Wippenschwenkachse oberhalb der Raddrehachse anzuordnen. Dies vereinfacht extrem die Realisierung der Wippe bzw. der Schaukelanordnung am Fahrzeug.

Gemäß einer vorteilhaften Ausführungsform kann die Wippenschwenkachse in einem mittleren Längsabschnitt des Fahrzeugs, der sich über maximal ein Drittel oder maximal ein Viertel oder maximal ein Fünftel oder maximal ein Zehntel der in der Fahrzeuglängsachse verlaufenden Fahrgestelllänge mittig erstreckt, oberhalb der Raddrehachse angeordnet sein. Je geringer der bei horizontal ausgerichtetem Fahrzeug parallel zur Fahrzeuglängsachse gemessene Axialabstand zwischen der Wippenschwenkachse und der Raddrehachse ist, desto leichter kann das Fahrzeug horizontal ausbalanciert werden. Besonders vorteilhaft kann daher ebenfalls vorgesehen sein, dass sich die Wippenschwenkachse bezüglich der Fahrzeuglängsachse im Wesentlichen mittig am Fahrgestell, oberhalb der Raddrehachse befindet.

Bei einer besonders vorteilhaften Ausführungsform kann die Wippenschwenkachse bei horizontal ausgerichtetem Fahrzeug, und insbesondere bei stehendem Fahrzeug, senkrecht oberhalb der Raddrehachse angeordnet sein.

Zur vereinfachten Realisierung der Verschwenkbarkeit der Wippe um die Wippenschwenkachse am Fahrgestell kann gemäß einer Ausführungsform vorgesehen sein, dass das Fahrgestell wenigstens eine Lagerkonsole aufweist, die sich oberhalb der Raddrehachse nach oben in Richtung zum Fahrzeugsitz erstreckt und an der die Wippe um die Wippenschwenkachse verschwenkbar angeordnet ist. Zweckmäßig kann an jeder Fahrzeugseite je eine solche Lagerkonsole vorgesehen sein. Je nach Positionierung der Wippenschwenkachse kann sich die jeweilige Lagerkonsole in der Höhenrichtung beispielsweise bis zum Fahrzeugsitz erstrecken. In der Fahrzeuglängsrichtung ist die jeweilige Lagerkonsole zweckmäßig etwa mittig oberhalb der Raddrehachse positioniert. Sie kann sich dabei beispielsweise über weniger als 30%, vorzugsweise über weniger als 20% der Fahrzeuglänge in der Fahrzeuglängsrichtung erstrecken.

Die Lagerung selbst kann beispielsweise mit wenigstens einem Lagerbolzen realisiert werden, der sich konzentrisch zur Wippenschenkachse erstreckt. Zweckmäßig kann auf jeder Fahrzeugseite ein solcher Lagerbolzen vorgesehen sein. Anstelle von zwei Lagerbolzen kann auch eine durchgehende Lagerwelle verwendet werden. Der Lagerbolzen bzw. die Lagerwelle kann drehfest mit dem Fahrgestell verbunden sein, während er bzw. sie drehbar an der Wippe angeordnet ist. Ebenso ist denkbar, dass der Lagerbolzen bzw. die Lagerwelle drehfest an der Wippe angeordnet ist, während er bzw. sie am Fahrgestell drehbar angeordnet ist.

Als vorteilhaft hat sich eine Variante herausgestellt, bei welcher ein vertikaler oberer Abstand zwischen der Wippenschwenkachse und dem Fahrzeugsitz kleiner ist als ein vertikaler unterer Abstand zwischen der Wippenschwenkachse und der Raddrehachse. Besonders vorteilhaft kann die Wippenschwenkachse im Bereich einer der Raddrehachse zugewandten Unterseite des Fahrzeugsitzes verlaufen. Mit anderen Worten, gemäß einer bevorzugten Ausführungsform kann vorgesehen sein, dass die Wippe im Bereich einer der Raddrehachse zugewandten Unterseite des Fahrzeugsitzes um die die Wippenschwenkachse verschwenkbar am Fahrgestell angeordnet ist. Somit ist die Wippenschwenkachse relativ weit oberhalb der Raddrehachse positioniert, wodurch die Balancewirkung verbessert ist.

Zweckmäßig ist eine Ausführungsform, bei welcher die Wippe vor der Wippenschwenkachse mit der Fußstütze und hinter der Wippenschwenkachse mit dem Fahrzeugsitz gekoppelt, vorzugsweise verbunden ist. Dies resultiert in einem extrem einfachen Aufbau zur Realisierung der Schaukel am Fahrzeug.

Besonders preiswert ist eine Ausführungsform, bei welcher die kraftübertragende Kopplung zwischen dem Fahrzeugsitz und der Wippe über wenigstens einen Zug-Druck-Stab erfolgt, der oben mit dem Fahrzeugsitz und unten hinter der Wippenschwenkachse mit der Wippe verbunden ist. Insbesondere kann sich dieser Zug-Druck-Stab im Wesentlichen vertikal erstrecken und einen Vertikalträger bilden.

Alternativ ist ebenso denkbar, dass die kraftübertragende Kopplung zwischen dem Fahrzeugsitz und der Wippe über wenigstens ein Zug-Druck-Kabel erfolgt, das oben mit dem Fahrzeugsitz und unten hinter der Wippenschwenkachse mit der Wippe verbunden ist. Ein derartiges Zug-Druck-Kabel besitzt üblicherweise eine zugstabile Seele und eine druckstabile Hülle, so dass sowohl Zugkräfte als auch Druckkräfte übertragbar sind.

Ferner ist alternativ vorstellbar, dass die kraftübertragende Kopplung zwischen dem Fahrzeugsitz und der Wippe über wenigstens eine hydraulische Kraftübertragung erfolgt, die oben mit dem Fahrzeugsitz und unten hinter der Wippenschwenkachse mit der Wippe verbunden ist. Eine solche hydraulische Kraftübertragung kann beispielsweise ein am Fahrgestell abgestütztes und mit dem Sitz gekoppeltes Kolben-Zylinder-Aggregat und ein am Fahrgestell abgestütztes und mit der Wippe gekoppeltes Kolben-Zylinder-Aggregat aufweisen, wobei die beiden Kolben-Zylinder-Aggregate über eine Hydraulikleitung miteinander hydraulisch kommunizierend gekoppelt sind.

Eine besonders vorteilhafte Ausführungsform sieht vor, dass der Fahrzeugsitz mittels wenigstens einer Sitzlinearführung vertikal verstellbar am Fahrgestell gelagert ist, so dass sich der Fahrzeugsitz relativ zum Fahrgestell im Wesentlichen nur vertikal verstellen kann. Ferner wird zweckmäßig vorgeschlagen, dass die Wippe hinter der Wippenschwenkachse kraftübertragend mit dem Fahrzeugsitz gekoppelt ist. Somit werden die vertikalen Relativbewegungen des Fahrzeugsitzes gegenüber dem Fahrgestell auf die Wippe übertragen. Eine solche Sitzlinearführung kann durch einen am Fahrzeugsitz feststehenden Bolzen und eine am Fahrgestell abgestützte Langerbuchse gebildet sein, in welcher der Bolzen linear geführt ist. Ebenso sind Schienensysteme denkbar, um eine solche Sitzlinearführungen zu realisieren. Zweckmäßig können mehrere derartige Sitzlinearführungen vorgesehen sein.

Vorteilhaft kann nun gemäß einer Weiterbildung vorgesehen sein, dass die vorstehend genannte Sitzlinearführung mit dem weiter oben genannten Zug-Druck-Stab zusammenwirkt, so dass der Fahrzeugsitz über den geführten Zug-Druck-Stab am Fahrgestell linear geführt ist. Hierdurch erhält der Zug-Druck-Stab eine Doppelfunktion, was einen kompakten Aufbau begünstigt.

Bei einer Weiterbildung kann vorgesehen sein, dass die Fußstütze starr mit der Wippe verbunden ist oder mittels wenigstens einer Stützenlinearführung vertikal verstellbar am Fahrgestell gelagert und auf geeignete Weise, insbesondere gelenkig und/oder elastisch, mit der Wippe gekoppelt ist. Hierdurch kann ein Verschwenken der Wippe die Fußstütze im Wesentlichen vertikal verstellen. Die optionale Stützenlinearführung sorgt dafür, dass sich die Fußstütze im Wesentlichen nur vertikal verstellen kann.

Ein andere Bauform schlägt vor, dass die Wippe ein Getriebe aufweist oder durch ein Getriebe gebildet ist, das sich in der Wippenschwenkachse am Fahrgestell vertikal abstützt, und das zumindest ein mit dem Fahrzeugsitz antriebsverbundenes Sitzrad sowie mindestens ein mit der Fußstütze antriebsverbundenes Stützenrad aufweist. Die Antriebsverbindung kann beispielsweise jeweils über eine Zahnstange erfolgen, die auf geeignete Weise am Fahrzeugsitz bzw. an der Fußstütze angebracht ist. Vorzugsweise kann vorgesehen sein, dass das Sitzrad und das Stützenrad jeweils drehfest mit einer Getriebewelle verbunden sind, die um die Wippenschwenkachse verschwenkbar am Fahrgestell gelagert ist. Im einfachsten Fall ist das Getriebe somit nach Art eines Wellrads ausgestaltet, das zwei Zahnräder auf einer gemeinsamen Welle besitzt.

Gemäß einer anderen vorteilhaften Ausführungsform kann der Fahrzeugsitz in einem vor der Wippenschwenkachse liegenden vorderen Sitzbereich um eine parallel zur Raddrehachse verlaufende Sitzschwenkachse verschwenkbar am Fahrgestell gelagert sein. Ferner kann der Fahrzeugsitz in einem hinter der Wippenschwenkachse liegenden hinteren Sitzbereich mit der Wippe verbunden sein. Der Fahrzeugsitz ist somit insgesamt um die Sitzschwenkachse verschwenkbar am Fahrgestell gelagert. Da sich die Sitzschwenkachse im vorderen Sitzbereich befindet, ist der Fahrzeugsitz dadurch im hinteren Sitzbereich relativ zum Fahrgestell vertikal verstellbar, also entlang der Fahrzeughochachse. Somit ist der Fahrzeugsitz einerseits über den vorderen Sitzbereich am Fahrgestell gehalten, während er im hinteren Sitzbereich für die Schaukelfunktion vertikal zum Fahrgestell beweglich ist.

Eine andere Ausführungsform schlägt vor, dass der Fahrzeugsitz ein Sitzunterteil aufweist, das in einem vor der Wippenschwenkachse liegenden vorderen Sitzbereich um eine parallel zur Raddrehachse verlaufende Sitzschwenkachse verschwenkbar am Fahrgestell angeordnet ist. Der Fahrzeugsitz kann außerdem ein Sitzoberteil aufweisen, das auf dem Sitzunterteil parallel zur Fahrzeuglängsrichtung verschiebbar angeordnet ist. Ferner ist hier die Wippe in einem hinter der Wippenschwenkachse liegenden hinteren Sitzbereich mit dem Sitzunterteil verbunden. Bei dieser Ausführungsform wird die Schaukelfunktion über das Sitzunterteil realisiert. Über das Sitzoberteil und dessen Längsverschiebbarkeit wird dagegen eine andere Funktion realisiert. Durch die Längsverschiebbarkeit des Sitzoberteils kann der Fahrzeugführer seine Sitzposition in der Fahrzeuglängsrichtung relativ zum Fahrgestell variieren, um das Beschleunigen bzw. das Abbremsen des Fahrzeugs signifikant zu verbessern. Hierdurch lässt sich das Fahrzeug mit erhöhter Dynamik beschleunigen und bremsen. Durch die Unterteilung des Fahrzeugsitzes in das Sitzoberteil und das Sitzunterteil lassen sich die beiden Funktionen voneinander trennen, was die Realisierung der Schaukelfunktion einerseits und der verbesserten Dynamik andererseits erleichtert.

Alternativ wäre grundsätzlich auch eine Ausführungsform denkbar, bei welcher die Wippe in einem hinter der Wippenschwenkachse liegenden hinteren Sitzbereich mit dem Sitzoberteil verbunden ist. Um hierbei die Längsverstellbarkeit des Sitzoberteils weiterhin gewährleisten zu können, ist eine entsprechende Kopplung zwischen Wippe und Sitzoberteil erforderlich, die eine entsprechende Flexibilität und/oder Verstellbarkeit ermöglicht. Beispielsweise ist denkbar, dass eine Verbindungsstelle, die das Sitzoberteil mit der Wippe verbindet, eine Relativverstellung zwischen Wippe und Sitzoberteil in der Fahrzeuglängsrichtung ermöglicht.

Gemäß einer speziellen Ausführungsform können Wippe, Fußstütze und Fahrzeugsitz eine Einheit bilden, die insgesamt am Fahrgestell um die Wippenschwenkachse schwenkbar angeordnet ist. Hierzu kann die Wippe mit der Fußstütze und mit dem Fahrzeugsitz zweckmäßig starr verbunden sein. Unter einer starren Verbindung wird im vorliegenden Zusammenhang eine Verbindung verstanden, welche die auftretenden Drehmomente zum Ausbalancieren der Wippe übertragen kann. Auch diese Bauform zeichnet sich durch einen preiswert realisierbaren, einfachen Aufbau aus. Insbesondere kann auf eine zusätzliche Sitzschwenkachse verzichtet werden.

Bei einer anderen Ausführungsform kann die Wippe einen Wippenrahmen aufweisen, der über wenigstens eine hintere Verbindung mit dem Fahrzeugsitz verbunden ist, der über wenigstens eine vordere Verbindung mit der Fußstütze verbunden ist und der über wenigstens ein Lager am Fahrgestell um die Wippenschwenkachse schwenkbar gelagert ist. Dieser Wippenrahmen kann bezüglich einer senkrecht zur Raddrehachse verlaufenden Längsmittelebene des Fahrzeugs spiegelsymmetrisch aufgebaut sein, so dass er auf jeder Fahrzeugseite eine solche hintere Verbindung, eine solche vordere Verbindung und ein solches Lager aufweist.

Bei einer vorteilhaften Weiterbildung kann die vordere Verbindung starr ausgestaltet sein. In der Folge ist dann die Wippe fest bzw. starr mit der Fußstütze verbunden. In diesem Fall ist die Fußstütze im ausbalancierten Zustand ausschließlich über die Wippe gehalten. Alternativ dazu ist grundsätzlich denkbar, die Fußstütze, zum Beispiel über Schienen oder dergleichen an der Vorderseite des Fahrgestells vertikal verstellbar zu lagern und die vordere Verbindung gelenkig auszugestalten. Hierdurch erhält die Fußstütze quer zur Hochachse eine erhöhte Stabilität.

Eine andere Weiterbildung schlägt vor, die hintere Verbindung gelenkig und/oder parallel zur Fahrzeuglängsachse verschiebbar und/oder elastisch auszugestalten. Insbesondere mit den vorstehend beschriebenen Ausführungsformen, bei denen der Fahrzeugsitz um eine Sitzschwenkachse verschwenkbar am Fahrgestell angeordnet ist, ist eine derartige gelenkige oder elastische Kopplung zwischen Wippe und Fahrzeugsitz im Bereich der hinteren Verbindung von Vorteil.

Eine andere Weiterbildung schlägt vor, dass der Wippenrahmen wenigstens einen Horizontalträger aufweist, der direkt oder indirekt mit der Fußstütze verbunden ist. Optional kann der Horizontalträger direkt oder indirekt um die Wippenschwenkachse am Fahrgestell verschwenkbar angeordnet sein. Beispielsweise kann dieser Horizontalträger unmittelbar in die Fußstütze übergehen. Ebenso ist denkbar, dass der Horizontalträger über einen im Wesentlichen vertikal verlaufenden Verbindungsträger mit der Fußstütze verbunden ist. Ferner ist denkbar, dass die Lagerung um die Wippenschwenkachse unmittelbar am Horizontalträger erfolgt. Alternativ kann auch hier ein vertikaler Verbindungsträger vorhanden sein, der seinerseits unmittelbar um die Wippenschwenkachse verschwenkbar gelagert ist und der mit dem Horizontalträger verbunden ist. Somit ist der Horizontalträger in diesem Fall indirekt, nämlich über besagten vertikalen Verbindungsträger, um die Wippenschwenkachse am Fahrgestell verschwenkbar angeordnet. Alternativ kann der Wippenrahmen auch an anderer Stelle, also außerhalb des Horizontalträgers am Fahrgestell um die Wippenschenkachse verstellbar angeordnet sein, beispielsweise an einem Sitzträger zur Montage des Fahrzeugsitzes.

Der Wippenrahmen kann außerdem zumindest einen Vertikalträger aufweisen, der oben mit dem Fahrzeugsitz verbunden ist und der unten mit dem Horizontalträger verbunden ist. Über besagten Vertikalträger lassen sich die auf den Fahrzeugsitz wirkenden Kräfte einfach auf den Horizontalträger übertragen. Da diese Vertikalträger im Wesentlichen nur Druckkräfte übertragen müssen, lassen sie sich hinsichtlich ihres Querschnitts relativ klein dimensionieren, was die Unterbringung der Schaukelanordnung am Fahrzeug erleichtert. Ebenso lässt sich der Horizontalträger vergleichsweise einfach am Fahrgestell direkt oder indirekt lagern. Bei einer starren Wippe überträgt der jeweilige Vertikalträger außerdem die gegenläufigen Drehmomente von Fahrzeugsitz und Fußstütze. Hierzu kann er zweckmäßig einen geeigneten Querschnitt besitzen, der beispielsweise flach sein kann.

Der Vertikalträger stützt sich in einer Abstützposition am Horizontalträger ab. Gemäß einer Weiterbildung der vorstehend erläuterten Ausführungsform kann nun diese Abstützposition am Horizontalträger parallel zur Fahrzeuglängsrichtung einstellbar ausgestaltet sein. Auf diese Weise ist es möglich, die Schaukelfunktion bzw. die Wippenanordnung bzw. die Wippe individuell auf den jeweiligen Fahrzeugführer einzustellen. Fahrzeugführer unterscheiden sich hinsichtlich Gewicht und Größe sowie Körperumfang, was sich auf die räumliche Gewichtsverteilung bei sitzendem Fahrzeugführer auswirkt. Durch die Längsverstellbarkeit der Abstützposition kann das hier vorgestellte Fahrzeug besonders einfach an unterschiedliche Fahrzeugführer angepasst werden, um die gewünschte Schaukelfunktion mit erhöhter Sicherheit realisieren zu können.

Eine andere Weiterbildung schlägt vor, dass die eingestellte Abstützposition mittels einer Sicherungseinrichtung gesichert ist. Beispielsweise kann die Verstellbarkeit mittels einer Schlittenführung und einem darin bzw. daran verstellbaren Schlitten realisiert werden. Die Fixiereinrichtung kann dann zum Blockieren der Verstellbarkeit zwischen Schlitten und Schlittenführung genutzt werden. Im einfachsten Fall kann es sich hierbei um eine Schraube handeln.

Eine andere Ausführungsform schlägt vor, dass der Rahmen einen vertikalen Lagerträger aufweist, der oben um die Wippenschwenkachse am Fahrgestell verschwenkbar gelagert ist und der unten fest mit dem Horizontalträger verbunden ist. Durch diese Maßnahme lässt sich die Wippenschwenkachse mit einem vergleichsweise großen vertikalen Abstand zur Raddrehachse am Fahrgestell positionieren, während gleichzeitig der Horizontalträger bezüglich der Vertikalrichtung näher an der Raddrehachse angeordnet werden kann. Hierdurch vereinfacht sich der Aufbau des Fahrzeugs bzw. die Unterbringung der Wippe am Fahrzeug.

Bei allen vorstehend beschriebenen Varianten kann gemäß einer bevorzugten Ausführungsform vorgesehen sein, dass der Fahrzeugsitz ein Sitzunterteil aufweist, über das der Fahrzeugsitz verstellbar am Fahrgestell angeordnet ist, wobei der Fahrzeugsitz außerdem ein Sitzoberteil aufweist, das auf dem Sitzunterteil in der Fahrzeuglängsachse verschiebbar angeordnet ist. Die Wippe ist mit dem Sitzunterteil gekoppelt. Der Fahrer sitzt auf dem Sitzoberteil und kann sich relativ zum Fahrgestell nach vorn zum Beschleunigen oder nach hinten zum Bremsen verschieben. Beispielsweise kann der Fahrer hierzu an der in der Regel vorhandenen Lenkstange ziehen oder drücken. Über die Wippe ist der Fahrzeugsitz insgesamt relativ zum Fahrgestell verstellbar.

Zur Abstützung der Wippe am Fahrgestell und zum Verschwenken der Wippe um die Wippenschwenkachse kann zweckmäßig zumindest ein Wippenlager vorgesehen sein. Hierbei kann es sich im einfachsten Fall um eine Lagerwelle handeln, die in einer Lagerschale verschwenkbar aufgenommen ist. Ebenso kann wie weiter oben beschrieben wenigstens ein Lagerbolzen vorgesehen sein. Bevorzugt kann das Wippenlager zumindest ein Wälzlager aufweisen. Das Wippenlager kann bevorzugt an der vorstehend genannten Lagerkonsole angeordnet sein. Alternativ kann das Wippenlager auch an der Wippe angeordnet sein.

Ferner ist denkbar, das Wippenlager selbstzentrierend auszugestalten, so dass es die Wippe in eine vorbestimmte Ausgangslage antreibende Kräfte erzeugt. Beispielsweise kann das Wippenlager hierzu als exzentrisches Lager ausgestaltet sein, bei dem sich die Wippe insgesamt nach oben verstellt, wenn die Wippe aus der vorbestimmten Ausgangslage um die Wippenschwenkachse verschwenkt. Hierdurch wird potentielle Energie aufgebaut, die Kräfte zur Rückstellung der Wippe in die Ausgangslage erzeugt. Denkbar ist hierzu z.B. eine Ausgestaltung, bei der die Wippe exzentrisch zur Wippenschwenkachse mit einem um die Wippenschwenkachse verschwenkbar gelagerten Lagerkörper fest verbunden ist. Alternativ kann beispielsweise auch vorgesehen sein, dass das Wippenlager ein fest mit der Wippe verbundenes Zahnrad aufweist, das mit einer am Fahrgestell befestigten, konkav gewölbten Zahnstange in Eingriff steht und dabei um die Wippenschwenkachse verschwenkt. Eine Verdrehung des Zahnrads in der gewölbten Zahnstange führt einerseits dazu, dass die Wippe im Wesentlichen um die Wippenschwenkachse verschwenkt, und andererseits dazu, dass das sich Zahnrad entlang der gewölbten Zahnstange nach oben verstellt und dabei die damit fest verbundene Wippe mitnimmt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine vereinfachte Seitenansicht eines dynamisch balancierenden Fahrzeugs mit Fahrzeugsitz gemäß einer ersten Ausführungsform,
- Fig. 2: eine vereinfachte Seitenansicht eines dynamisch balancierenden Fahrzeugs mit Fahrzeugsitz gemäß einer zweiten Ausführungsform,
- Fig. 3: eine vereinfachte Seitenansicht eines dynamisch balancierenden Fahrzeugs mit Fahrzeugsitz gemäß einer dritten Ausführungsform,
- Fig. 4: eine vereinfachte Seitenansicht eines dynamisch balancierenden Fahrzeugs mit Fahrzeugsitz gemäß einer vierten Ausführungsform.

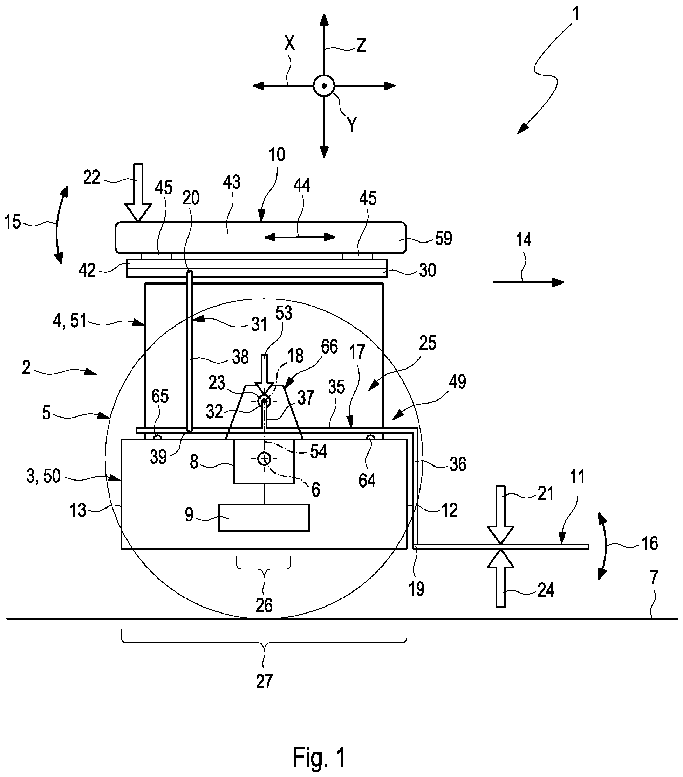

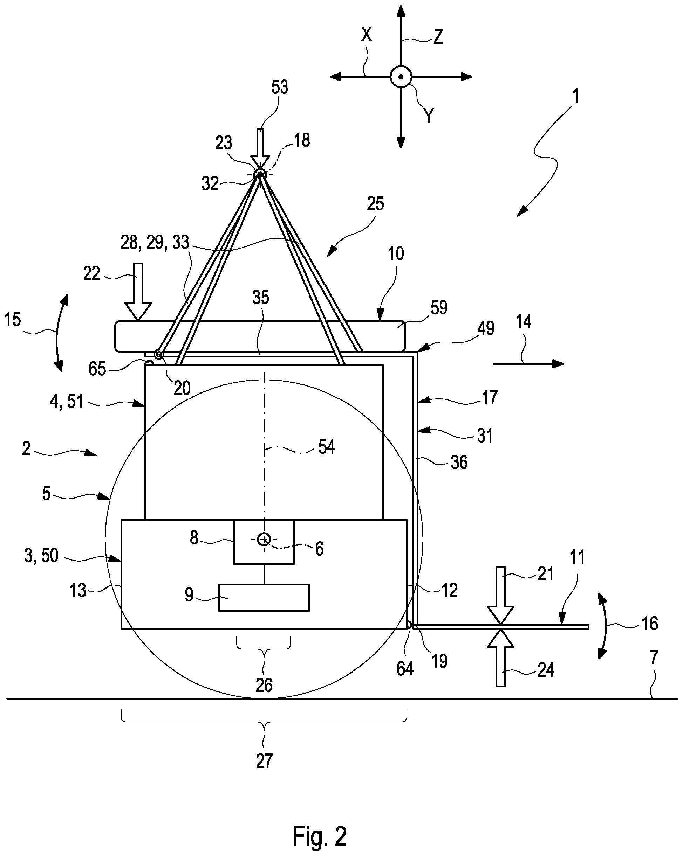

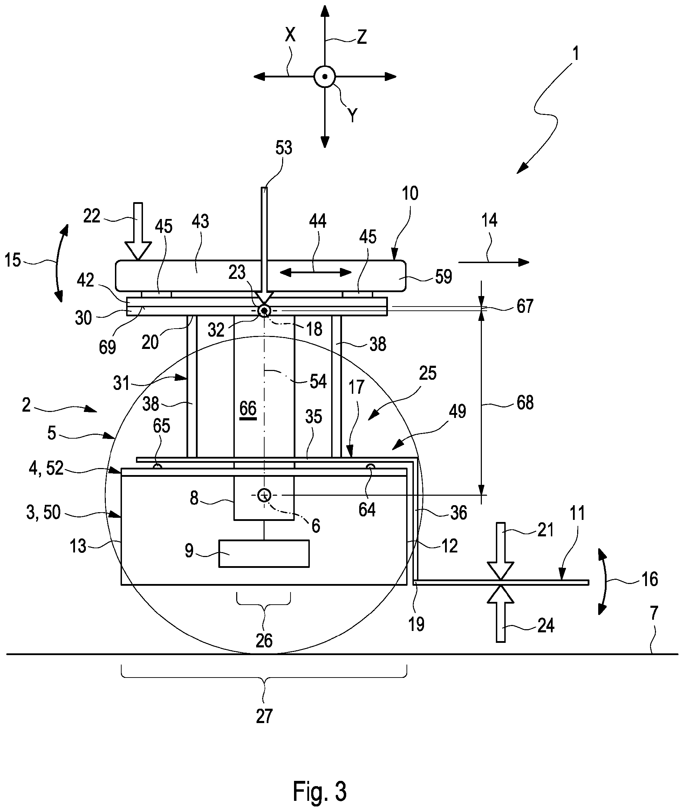

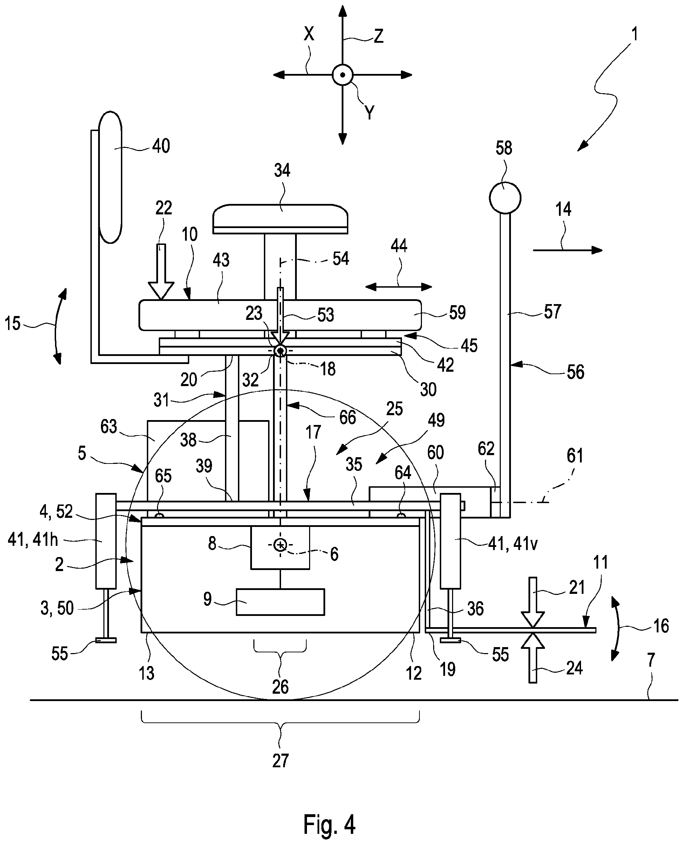

Entsprechend den Figuren 1 bis 4 umfasst ein dynamisch balancierendes Fahrzeug 1 ein Fahrgestell 2, das hier beispielsweise ein Untergestell 3 und ein Obergestell 4 umfasst. In den Beispielen der Fig. 1 bis 4 ist das Untergestell 3 als selbstragender Fahrgestellkörper 50 ausgestaltet, der beispielsweise als Wanne geformt sein kann. Das Obergestell 4 ist in den Beispielen der Fig. 1 und 2 als Tragstruktur 51 ausgestaltet, die eine erhöhte bzw. vertikal vom Untergestell beabstandete Montageposition für einen weiter unten noch näher beschriebenen Fahrzeugsitz 10 bereitstellt. Im Beispiel der Fig. 3 und 4 ist das Obergestell 4 durch eine plattenförmige Abdeckung 52 gebildet, die den insbesondere nach oben offenen Fahrgestellkörper 50 an dessen Oberseite verschließt. In den Beispielen der Fig. 1 und 2 kann ebenfalls eine solche Abdeckung 52 vorhanden sein, die den Fahrgestellkörper 50 verschließt und die Tragstruktur 51 trägt.

Am Fahrgestell 2 sind zwei Räder 5 angeordnet, die in der Blickrichtung der Figuren deckungsgleich übereinander liegen. Dem Betrachter ist in den Figuren 1 bis 4 jeweils die rechte Fahrzeugseite zugewandt. An dieser rechten Fahrzeugseite befindet sich das in den Figuren erkennbare rechte Rad 5. Vom Betrachter abgewandt ist dagegen die linke Fahrzeugseite, an der sich dann das linke Rad 5 befindet. Die beiden Räder 5 sind um eine gemeinsame Raddrehachse 6 drehbar am Fahrgestell 2 angeordnet, hier am Untergestell 3. Die Raddrehachse 6 erstreckt sich in den Figuren 1 bis 4 jeweils senkrecht zur Zeichnungsebene.

Das Fahrzeug 1 besitzt eine Fahrzeuglängsachse X, die im ausbalancierten Gebrauchszustand des Fahrzeugs 1 im Wesentlichen horizontal verläuft. Ferner besitzt das Fahrzeug 1 eine Fahrzeugquerachse Y, die senkrecht zur Fahrzeuglängsachse X und im ausbalancierten Gebrauchszustand des Fahrzeugs 1 ebenfalls im Wesentlichen horizontal verläuft. In den Figuren 1 bis 4 steht die Fahrzeugquerachse Y senkrecht zur Zeichnungsebene. Dementsprechend erstreckt sich die Raddrehachse 6 parallel zur Fahrzeugquerachse Y. Schließlich besitzt das Fahrzeug 1 außerdem eine Hochachse Z, die sich senkrecht zur Fahrzeuglängsachse X und senkrecht zur Fahrzeugquerachse Y erstreckt und die im ausbalancierten Gebrauchszustand des Fahrzeugs 1 im Wesentlichen vertikal verläuft.

Im ausbalancierten Gebrauchszustand steht das Fahrzeug 1 mit seinen Rädern 5 auf einem Untergrund 7 und ist im Wesentlichen horizontal ausgerichtet. Die Räder 5 sind jeweils mit einem Elektromotor 8 angetrieben. Das Fahrzeug 1 ist ferner mit einer Steuereinrichtung 9 ausgestattet, die mit den Elektromotoren 8 gekoppelt ist und die zum Ansteuern der Elektromotoren 8 dient, um so das Fahrzeug 1 zu balancieren, zu beschleunigen, zu bremsen und zu lenken. Es ist klar, dass die Steuereinrichtung 9 hierzu mit einer hier nicht gezeigten Neigungssensorik und mit einer nur in Fig. 4 gezeigten Lenkeinrichtung 56 zusammenwirkt. Die Lenkeinrichtung 56 kann dabei eine Lenkstange 57 und/oder einen Joystick aufweisen, was weiter unten noch näher erläutert wird.

Zweckmäßig sind die Räder 5 am Fahrgestell 2 bzw. Fahrgestellkörper 50 gelagert. Die Elektromotoren 8 sind am Fahrgestell 2 so angebracht, dass sie Drehmomente zum Antreiben und Bremsen der Räder 5 am Fahrgestell 2 bzw. am Fahrgestellkörper 50 abstützen. Der wannenartige Fahrgestellkörper 50 nimmt außerdem die Steuereinrichtung 8 sowie eine oder mehrere, hier nicht gezeigte Batterien zur Stromversorgung der Elektromotoren 8 und der Steuereinrichtung 9 auf.

Das Fahrzeug 1 ist außerdem mit einem Fahrzeugsitz 10 ausgestattet, der auf dem Fahrgestell 2, bei den Beispielen der Fig. 1 und 2 auf dem Obergestell 4 angeordnet ist. Der Fahrzeugsitz 10 weist zweckmäßig ein Sitzkissen 59 auf. Außerdem ist das Fahrzeug 1 mit einem Trittbrett 11 ausgestattet, das zum Aufstellen der Füße eines auf dem Fahrzeugsitz 10 sitzenden Fahrzeugführers dient und das im vorliegenden Zusammenhang daher als Fußstütze 11 bezeichnet wird. Die Fußstütze 11 ist an einer Vorderseite 12 des Fahrgestells 2 angeordnet ist. Bei Vorwärtsfahrt des Fahrzeugs 1 befindet sich die Vorderseite 12 in der Fahrtrichtung vorn, während sich eine Rückseite 13 des Fahrgestells 2 dann bezüglich der Fahrtrichtung hinten befindet. Zur Klarstellung ist in den Figuren die Fahrtrichtung des Fahrzeugs 1 bei Vorwärtsfahrt durch einen Pfeil angedeutet und mit 14 bezeichnet. Bei der Nutzung des Fahrzeugs 1 kann der Fahrzeugführer auf dem Fahrzeugsitz 10 und der Fußstütze 11 Platz nehmen, wobei er sich in üblicher Weise mit seinem Gesäß auf den Fahrzeugsitz 10 setzt und seine Füße auf der Fußstütze 11 abstellt.

Beim hier vorgestellten Fahrzeug 1 ist der Fahrzeugsitz 10 relativ zum Fahrgestell 2 beweglich angeordnet. Eine entsprechende Beweglichkeit des Fahrzeugsitzes 10 ist in den Figuren durch einen Doppelpfeil 15 angedeutet. Auch die Fußstütze 11 ist relativ zum Fahrgestell 2 beweglich angeordnet. Diese Beweglichkeit der Fußstütze 11 ist in den Figuren durch einen Doppelpfeil 16 angedeutet. Das hier vorgestellte Fahrzeug 1 ist ferner mit einer Wippe 17 ausgestattet, die am Fahrgestell 2 um eine parallel zur Raddrehachse 6 verlaufende Wippenschwenkachse 18 schwenkbar angeordnet ist. Somit verläuft auch die Wippenschwenkachse 18 parallel zur Fahrzeugquerrichtung Y. Diese Wippe 17 koppelt den Fahrzeugsitz 10 mit der Fußstütze 11 zum Ausgleich von Drehmomenten um die Wippenschwenkachse 18. Am Fahrzeug 1 wird somit eine um die Wippenschwenkachse 18 schwenkbar am Fahrgestell 2 angeordnete Schaukel 25 bzw. Waage 25 realisiert, die durch den Fahrzeugsitz 10, die Fußstütze 11, die Wippe 17 und deren Schwenkbarkeit um die Wippenschwenkachse 18 gebildet ist. Nachfolgend wird meistens von der Schaukel 25 gesprochen, wobei gegebenenfalls auch oder nur die Waage 25 gemeint ist.

Bei den Ausführungsformen der Figuren 1, 3 und 4 die Wippe 17 bezüglich der Fahrtrichtung 14 vor der Wippenschwenkachse 18 mit dem Fußstütze 11 und bezüglich der Fahrtrichtung 14 hinter der Wippenschwenkachse 18 mit dem Fahrzeugsitz 10 verbunden. In den Figuren 1 bis 4 ist dabei eine vordere Verbindung der Wippe 17 zur Fußstütze 11 mit 19 bezeichnet, während eine hintere Verbindung zum Fahrzeugsitz 10 mit 20 bezeichnet ist.

Die Wippe 17 bzw. die Schaukel 25 ermöglicht ein Ausbalancieren der über die Füße des Fahrzeugführers auf der Fußstütze 11 lastenden vorderen Gewichtskräfte 21, die in den Figuren durch einen Pfeil angedeutet sind, durch hintere Gewichtskräfte 22, die der Fahrzeugführer auf den Fahrzeugsitz 10 aufbringen kann und die in den Figuren durch einen Pfeil angedeutet sind. Im ausbalancierten Zustand wird die Gewichtskraft des Fahrzeugführers dann im Wesentlichen nur noch über eine Lagerung 23 in das Fahrgestell 2 eingeleitet, über die die Wippe 17 bzw. die Schaukel 25 um die Wippenschwenkachse 18 verschwenkbar am Fahrgestell 2 angeordnet und am Fahrgestell 2 abgestützt ist. Die vorderen Gewichtskräfte 21 erzeugen ein die Wippe 17 bzw. das Fahrzeug 1 nach vorn kippendes Drehmoment um die Wippenschwenkachse 18, das sich in den Fig. 1 bis 4 im Uhrzeigersinn dreht, während die hinteren Gewichtskräfte 22 ein die Wippe 17 bzw. das Fahrzeug 1 nach hinten kippendes Drehmoment um die Wippenschwenkachse 18 erzeugen, das sich in den Fig. 1 bis 4 im Gegenuhrzeigersinn dreht. Bei ausbalancierter Wippe 17 bzw. Schaukel 25 heben sich die um die Wippenschwenkachse 18 wirkenden Drehmomente auf, die durch die Gewichtsbelastung der Fußstütze 11 und durch die Gewichtsbelastung des Fahrzeugsitzes 10 erzeugt werden. In der Folge entsteht eine resultierende Gewichtskraft 53, die vertikal verläuft und nur in der Lagerung 23 wirkt und somit senkrecht auf der Wippenschwenkachse 18 steht und dementsprechend eine drehmomentfreie Gewichtskraftübertragung von der Wippe 17 auf das Fahrgestell 2 ermöglicht.

Die Wippe 17 koppelt die Fußstütze 11 mit dem Fahrzeugsitz 10 derart, dass eine den Fahrzeugsitz 10 nach unten drückende Kraft, zum Beispiel die hintere Gewichtskraft 22, eine die Fußstütze 11 nach oben drückende Gegenkraft 24 erzeugt, die im ausbalancierten Zustand der Wippe 17 die vordere Gewichtskraft 21 kompensiert.

Der Fahrzeugsitz 10 und die Fußstütze 11 sind bezüglich des Fahrgestells 2 jeweils zumindest im Bereich ihrer Verbindung mit der Wippe 17, also insbesondere im Bereich der vorderen Verbindung 19 sowie der hinteren Verbindung 20 entlang der Fahrzeughochachse Z, also nach oben und nach unten verstellbar angeordnet. Die Wippe 17 ist hier ferner so gestaltet, dass sie die Fußstütze 11 derart mit dem Fahrzeugsitz 10 koppelt, dass eine Verstellung des Fahrzeugsitzes 10 nach unten eine Verstellung der Fußstütze 11 nach oben bewirkt. Ebenso bewirkt ein Niederdrücken der Fußstütze 11 ein Hochdrücken des Fahrzeugsitzes 10.

Bei den hier gezeigten bevorzugten Ausführungsformen ist die Wippenschwenkachse 18 oberhalb der Raddrehachse 6 angeordnet. Insbesondere befindet sich die Wippenschwenkachse 18 in einem mittleren Längsabschnitt 26 des Fahrgestells 2. Dieser mittlere Längsabschnitt 26 erstreckt sich dabei über maximal ein Drittel der gesamten Fahrgestelllänge 27, die parallel zur Fahrzeuglängsachse X gemessen ist. Je kleiner dieser mittlere Längsabschnitt 26 dimensioniert ist, desto besser ist der Effekt der Wippe 17 bzw. der Schaukel 25 auf die Schwingungsreduzierung des Fahrzeugs 1. Besonders vorteilhaft ist daher eine Ausführungsform, bei der gemäß den Figuren 1 bis 4 die Wippenschwenkachse 18 im Wesentlichen vertikal oberhalb der Raddrehachse 6 angeordnet ist. Dies gilt somit insbesondere für den horizontal ausgerichteten Zustand des Fahrzeugs 1. Eine durch die Raddrehachse 6 und die Wippenschwenkachse 18 verlaufende Vertikale ist in den Figuren mit 54 bezeichnet.

Bei den Ausführungsformen der Figuren 1 bis 4 weist die Wippe 17 einen Wippenrahmen 31 oder kurz Rahmen 31 auf, der über die hintere Verbindung 20 mit dem Fahrzeugsitz 10 verbunden ist, der über die vordere Verbindung 19 mit der Fußstütze 11 verbunden ist und der über wenigstens ein Lager 32 am Fahrgestell 2 um die Wippenschwenkachse 18 schwenkbar gelagert ist. Es ist klar, dass das Fahrzeug 1 zweckmäßig auf jeder Fahrzeugseite je eine hintere Verbindung 20, je eine vordere Verbindung 19 und je ein Lager 32 aufweisen kann. Die Lagerung 23 ist dann durch das jeweilige Lager 32 gebildet.

Die vordere Verbindung 19 kann starr ausgestaltet sein, so dass die Wippe 17 bzw. der Rahmen 31 starr mit der Fußstütze 11 verbunden ist. Somit verschwenkt die Fußstütze 11 um die Wippenschwenkachse 18. Alternativ dazu ist denkbar, die Fußstütze 11, zum Beispiel über eine Vertikalführung, höhenverstellbar am Fahrgestell 2 zu lagern, so dass die Fußstütze 11 letztlich nur vertikal relativ zum Fahrgestell 2 verstellt wird. Die vordere Verbindung 19 ist dann entsprechend gelenkig bzw. elastisch gestaltet, um dies zu realisieren. Eine derartige lineare Vertikalführung, die auch als Linearführung oder Stützenlinearführung bezeichnet werden kann, ist in den Figuren nicht dargestellt. Die Stützenlinearführung baut kompakt, ist reibungsarm und erhöht den Sitzkomfort.

Die hintere Verbindung 20 ist in den Beispielen der Fig. 1 bis 4 vergleichsweise starr ausgestaltet, derart, dass sie Drehmomente übertragen kann. Bei anderen, hier nicht gezeigten Ausführungsformen kann die hintere Verbindung 20 gelenkig und/oder elastisch und/oder parallel zur Fahrzeuglängsachse X verschiebbar ausgestaltet sein, um hier keine Versperrung innerhalb der Wippe 17 bzw. innerhalb der Schaukel 25 zu erhalten.

In den in den Figuren 1 bis 4 gezeigten Ausführungsformen umfasst der Rahmen 31 der Wippe 17 zumindest einen Horizontalträger 35, der sich im Wesentlichen horizontal erstreckt. Dieser Horizontalträger 35 ist direkt oder indirekt mit der Fußstütze 11 verbunden. In den Beispielen der Figuren 1 bis 4 ist eine indirekte Verbindung über einen vertikalen Verbindungsträger 36 vorgesehen. Dieser ist dann seinerseits über die vordere Verbindung 19 mit der Fußstütze 11 verbunden. Der Horizontalträger 35 ist bei den Fig. 1 und 2 direkt oder indirekt um die Wippenschwenkachse 18 am Fahrgestell 2 verschwenkbar angeordnet. Bei einer direkten Verschwenkbarkeit um die Wippenschwenkachse 18 erfolgt die Lagerung 23 unmittelbar am Horizontalträger 35. Bei den hier gezeigten Beispielen der Figur 1 erfolgt die Lagerung 23 des Horizontalträgers 35 dagegen indirekt, nämlich über einen vertikalen Lagerträger 37. Dieser ist oben um die Wippenschwenkachse 18 am Fahrgestell 2 schwenkbar gelagert. Insbesondere kann hierzu das Lager 32 an besagtem Lagerträger 37 ausgebildet sein. Unten ist der Lagerträger 37 fest bzw. starr mit dem Horizontalträger 35 verbunden. Auf diese Weise lässt sich ein vertikaler Abstand zwischen Raddrehachse 6 und Wippenschwenkachse 18 vergrößern, während gleichzeitig der Horizontalträger 35 relativ nahe an der Raddrehachse 6 bzw. am Untergestell 3 angeordnet werden kann.

Im Beispiel der Fig. 2 ist dagegen vorgesehen, dass anstelle eines Lagerträgers 37 eine Lagerträgeranordnung 28 zum Einsatz kommt, die nach Art einer Aufhängung 29 wirkt, um die Wippenschwenkachse 18 weiter nach oben verlegen zu können.

In den bevorzugten Beispielen der Fig. 3 und 4 erfolgt die Lagerung der Wippe 17 am Fahrgestell 2 dagegen nicht über den Horizontalträger 35, sondern über einen weiteren horizontal verlaufenden Träger 30, der im Folgenden als Sitzträger 30 bezeichnet wird. Der Sitzträger 30 trägt den Fahrzeugsitz 10 und ist über mindestens einen Vertikalträger 38 mit dem vorgenannten Horizontalträger 35 verbunden. Bevorzugt sind hier starre, also drehmomentübertragende Verbindungen. Im Beispiel der Fig. 3 sind zwei derartige Vertikalträger 38 gezeigt, beiderseits der Wippenschwenkachse 18. In Fig. 4 ist dagegen nur ein solcher Vertikalträger hinter der Wippenschwenkachse 18 vorgesehen.

Der Rahmen 31 weist auch im Beispiel der Figur 1 einen solchen Vertikalträger 38 auf, der oben mit dem Fahrzeugsitz 10, insbesondere über die hintere Verbindung 20 verbunden ist und der unten mit dem Horizontalträger 35 verbunden ist. Die Verbindungsstelle zwischen Verbindungsträger 38 und Horizontalträger 35 bildet eine Abstützposition 39, in der sich der Verbindungsträger 38 am Horizontalträger 35 abstützt. Diese Abstützposition 39 kann bevorzugt als feste oder starre Verbindung ausgestaltet sein. Theoretisch kann auch vorgesehen sein, dass die Abstützposition 39 parallel zur Fahrzeuglängsrichtung X am Horizontalträger 35 einstellbar ausgestaltet ist. Hierdurch lässt sich der in der Fahrzeuglängsachse X gemessene Abstand zwischen der Abstützposition 39 und der Wippenschwenkachse 18 einstellen. Durch diese Einstellbarkeit des Längsabstands zwischen Abstützposition 39 und Wippenschwenkachse 18 kann das Fahrzeug 1 bzw. die Wippe 17 bzw. die Schaukel 25 auf den jeweiligen Fahrzeugführer individuell eingestellt werden. Zweckmäßig kann die eingestellte Abstützposition 39 mit Hilfe einer entsprechenden, geeigneten Sicherungseinrichtung gesichert werden.

Bei den in den Figuren 1, 3 und 4 gezeigten Ausführungsformen weist der Fahrzeugsitz 10 ein Sitzunterteil 42 und ein Sitzoberteil 43 auf. Bei den Ausführungsformen der Fig. 1, 3 und 4 ist das Sitzoberteil 43 auf dem Sitzunterteil 42 in der Fahrzeuglängsrichtung 14 verschiebbar angeordnet. Eine entsprechende Verschiebbarkeit ist dabei durch einen Doppelpfeil angedeutet und mit 44 bezeichnet. Diese Verschiebbarkeit 44 kann beispielsweise mittels einer Führung 45, z.B. mit Schlitten oder mit Schienen, realisiert werden, um das Sitzoberteil 43 längsverstellbar am Sitzunterteil 42 zu lagern. Das Sitzoberteil 43 ist dabei relativ zum Sitzunterteil 42 so in der Fahrzeuglängsrichtung X verschiebbar, dass sich das Sitzoberteil 43 relativ zum Sitzunterteil 42 nach vorn und nach hinten verstellen lässt. Hierdurch kann der Fahrzeugführer besonders leicht seinen Schwerpunkt gegenüber dem Fahrgestell 2 nach vorn bzw. nach hinten verlagern, um ein Beschleunigen bzw. ein Bremsen des Fahrzeugs 1 zu bewirken. Zweckmäßig kann eine hier nicht dargestellte Zentriereinrichtung vorgesehen sein, die das Sitzoberteil 43 relativ zum Sitzunterteil 42 in eine mittige Ausgangslage federelastisch vorspannt, um einfach eine konstante Geschwindigkeit einstellen und halten zu können.

Die Wippe 17 ist nun, bevorzugt wenigstens im hinteren Sitzbereich, mit dem Sitzunterteil 42 verbunden. Hierdurch wird eine funktionale Trennung zwischen der Längsverstellbarkeit des Fahrzeugsitzes 10 bzw. des Sitzoberteils 43 einerseits und der Wippenfunktion oder Schaufelfunktion des Fahrzeugsitzes 10 bzw. des Sitzunterteils 42 andererseits erreicht.

Bei den in den Figuren 1 bis 4 gezeigten Ausführungsformen ist die Wippe 17 bevorzugt einerseits mit der Fußstütze 11 starr verbunden und andererseits mit dem Fahrzeugsitz 10 starr verbunden. Hierdurch bilden die Wippe 17, der Fahrzeugsitz 10 und die Fußstütze 11 eine Einheit 49, die insgesamt um die Wippenschenkachse 18 verschwenkbar am Fahrgestell 2 angeordnet ist. Diese Einheit 49 bildet in diesem Beispiel die Schaukel 25. Der Rahmen 31 der Wippe 17 umfasst im Beispiel der Fig. 2 ebenfalls den Horizontalträger 35, der hier den Fahrzeugsitz 10 trägt, und einen vertikalen Verbindungsträger 36, an dem die Fußstütze 11 festgelegt ist. Der Rahmen 31 umfasst hier außerdem eine Verbindungsstruktur 33, die den Horizontalträger 35 mit der Lagerung 23 verbindet. In der übertriebenen Darstellung der Figur 2 befindet sich die Wippenschwenkachse 18 deutlich oberhalb des Fahrzeugsitzes 10. Dies ist grundsätzlich möglich. Beispielsweise lässt sich die Lagerung 23 an in Fig. 4 gezeigten Armlehnen 34 realisieren, die seitlich des Fahrzeugsitzes 10 nach oben über diesen vorstehen. Bevorzugt sind jedoch Ausführungsformen, bei denen sich die Wippenschwenkachse 18 noch unterhalb des Fahrzeugsitzes 10 befindet. Derartige Ausführungsformen sind exemplarisch in den Fig. 1, 3 und 4 dargestellt.

Bevorzugt ist bei den Ausführungsformen der Fig. 1 bis 4 vorgesehen, dass die Wippe 17 starr bzw. fest mit dem Fahrzeugsitz 10 bzw. mit dessen Sitzunterteil 42 verbunden ist, so dass der Fahrzeugsitz 10 insgesamt mit der Wippe 17 um die Wippenschwenkachse 18 verschwenkt. Diese Verschwenkbarkeit ist dabei antriebslos realisierbar, also allein durch eine Balancierbewegungen des Fahrzeugführers, mit denen der Fahrzeugführer seinen Körperschwerpunkt auf dem Fahrzeugsitz 10 verlagert.

Die Verbindungsstruktur 33 des Rahmens 31 ist im Beispiel der Figur 2 nach Art einer Aufhängung 29 konzipiert. In einer solchen Aufhängung 29 lastet die Gewichtskraft des Fahrzeugführers von unten an der Lagerung 23. Alternativ lässt sich die Verbindungsstruktur 33 auch als Abstützung konzipieren, was z.B. in den Fig. 1, 3 und 4 realisiert ist. In einer solchen Abstützung lastet die Gewichtskraft des Fahrzeugführers von oben auf der Lagerung 23.

Für eine vereinfachte vertikale Verstellbarkeit der Fußstütze 11 kann wie erwähnt eine nicht gezeigte Stützenlinearführung vorgesehen sein. Eine ähnliche lineare Vertikalführung kann auch für den Fahrzeugsitz 10 vorgesehen sein, die ebenfalls als Linearführung bzw. als Sitzlinearführung bezeichnet werden kann. Eine solche Sitzlinearführung arbeitet ebenfalls besonders reibungsarm.

Wie vorstehend erläutert, kann zur Abstützung der Wippe 17 am Fahrgestell 10 und zum Verschwenken der Wippe 17 um die Wippenschwenkachse 18 zumindest eine Lagerung 23 bzw. ein Lager 32 vorgesehen sein, das im Folgenden auch als Wippenlager 32 bezeichnet wird. Bei diesem Wippenlager 32 kann es sich im einfachsten Fall um eine Lagerwelle oder um Lagerbolzen handeln, die in einer Lagerschale verschwenkbar aufgenommen ist bzw. sind. Bevorzugt kann das Wippenlager zumindest ein Wälzlager aufweisen.

Ferner ist denkbar, das Wippenlager 32 selbstzentrierend auszugestalten, so dass es die Wippe 17 in eine vorbestimmte Ausgangslage antreibende Kräfte erzeugt. Beispielsweise kann das Wippenlager 32 hierzu als exzentrisches Lager ausgestaltet sein, bei dem sich die Wippe 17 insgesamt nach oben verstellt, wenn die Wippe 17 aus der vorbestimmten Ausgangslage um die Wippenschwenkachse 18 verschwenkt. Hierdurch wird potentielle Energie aufgebaut, die Kräfte zur Rückstellung der Wippe 17 in die Ausgangslage erzeugt.

Bei den in den Figuren 1 bis 4 nur vereinfacht dargestellten Fahrzeugen 1 können optional weitere Komponenten vorgesehen sein, wie nachfolgend exemplarisch anhand des Beispiels der Fig. 4 näher erläutert. Gemäß Fig. 4 kann das Fahrzeug mit wenigstens einer Parkstütze 41 ausgestattet sein, mit der das auf dem Untergrund 7 ruhende Fahrzeug 1 auf dem Untergrund 7 abstützbar ist. Im Beispiel der Fig. 4 sind eine vordere Parkstütze 41v und eine hintere Parkstütze 41h vorgesehen, die eine besonders stabile Positionierung des Fahrzeugs 1 für den Parkzustand ermöglichen. In Fig. 4 sind die beiden Parkstützen 41 in einem eingefahrenen Passivzustand gezeigt, in dem Füße 55 der Parkstützen 41 vom Untergrund 7 abgehoben sind. In einem Ausgefahrenen Aktivzustand stützen sich die Füße 55 der Parkstützen 41 dann am Untergrund 7 ab. Bevorzugt ist hierbei eine Bauform, bei der zumindest eine der Parkstützen 41, vorzugsweise jedoch beide Parkstützen 41 an der Wippe 17 angeordnet ist bzw. sind. Damit ist die jeweilige Parkstütze 41 dann ebenfalls nicht direkt am Fahrgestell 2, sondern über die Wippe 17 nur indirekt am Fahrgestell 2 angeordnet. Ferner ist dabei bevorzugt, dass die jeweilige Parkstütze 41 dabei an dem unteren Horizontalträger 35 angebracht ist. Alternativ ist es ebenso möglich, die Parkstützen 41 in herkömmlicher Weise am Fahrgestell 2, insbesondere am Untergestell 3 bzw. am Fahrgestellkörper 50 anzuordnen.

Des Weiteren kann das Fahrzeug 1 gemäß Fig. 4 wenigsten eine Armlehne 34 aufweisen. Zweckmäßig ist auf jeder Fahrzeugseite je eine Armlehne 34 angeordnet. Die jeweilige Armlehne 34 bildet ebenfalls einen Bestandteil der Wippe 17 bzw. Einheit 49 und kann insbesondere am Fahrzeugsitz 10 angeordnet sein. Zusätzlich oder alternativ kann das Fahrzeug 1 eine Rückenlehne 40 aufweisen, die ebenfalls einen Bestandteil der Wippe 17 bzw. der Einheit 49 bildet und die insbesondere am Fahrzeugsitz 10 angeordnet sein kann. Sofern wie hier ein längsverschiebbarer Fahrzeugsitz 10 vorgesehen ist, erfolgt die Befestigung der jeweiligen Armlehne 34 und/oder der Rückenlehne 40 bevorzugt am Sitzoberteil 43, so dass die jeweilige Armlehne 34 bzw. die Rückenlehne 40 gemeinsam mit dem Sitzpolster 59 des Fahrzeugsitzes 10 relativ zum Fahrgestell 2 längsverstellbar sind.

Ferner weist das Fahrzeug 1 üblicherweise eine Lenkeinrichtung 56 auf. Diese kann gemäß Fig. 4 eine Lenkstange 57 aufweisen. Die Lenkstange 57 ist dabei am Fahrgestell 2 angeordnet. Insbesondere weist die Lenkstange 57 an ihrem oberen Ende einen Griff 58 auf, über den der Fahrzeugführer Lenkbefehle erzeugen kann. Am unteren Ende ist die Lenkstange 57 mit einem Lenklager 60 verbunden, an dem die Lenkstange 57 z.B. um eine parallel zur Fahrzeuglängsachse X verlaufende Lenkachse 61 verschwenkbar gelagert ist. Das Lenklager 60 umfasst einen Drehwinkelsensor 62, der das Verschwenken der Lenkstange 57 in Lenkbefehle wandelt. Der Drehwinkelsensor 62 ist auf geeignete Weise mit der Steuereinrichtung 9 gekoppelt, so dass diese dann die Lenkbefehle in entsprechende Steuerbefehle wandelt, mit denen die Steuereinrichtung 9 die Elektromotoren 8 zum Ausführen des jeweiligen Lenkbefehls ansteuert. Das Lenklager 60 ist nun am Fahrgestell 2, insbesondere an der Abdeckung 4 befestigt. Zusätzlich oder alternativ zur Lenkstange 57 kann die Lenkeinrichtung 56 auch einen hier nicht gezeigten Joystick aufweisen, mit dem Lenkbefehle erzeugt und der Steuereinrichtung 9 zugeführt werden können.

Gemäß Fig. 4 kann das Fahrzeug 1 außerdem mit einem Staufach 63 ausgestattet sein, z.B. in Form einer Box oder einer Schublade. Das Staufach 63 kann grundsätzlich unmittelbar am Fahrgestell 2, vorzugsweise auf der Abdeckung 4, angeordnet sein. Alternativ kann das Staufachs 63 grundsätzlich auch an der Wippe 17 bzw. Einheit 49 angeordnet sein. Im Beispiel der Fig. 4 befindet sich das Staufach 63 auf der Abdeckung 4. Dargestellt ist in Fig. 4 ein von hinten zugängliches Staufach 63, das am hinteren Fahrgestellende 13 angeordnet ist. Es ist klar, dass zusätzlich oder alternativ auch ein von vorn zugängliches Staufach 63 vorgesehen sein kann, das sich am vorderen Fahrgestellende 12 befindet.

Ferner ist klar, dass sich die vorstehend gezeigten Ausführungsformen soweit sinnvoll quasi beliebig miteinander kombinieren lassen. Beispielsweise lässt sich der mehrteilige Fahrzeugsitz 10 mit der Längsverstellbarkeit des Sitzoberteils 43 relativ zum Sitzunterteil 42 der Ausführungsformen der Fig. 1, 3 und 4 auch bei der Ausführungsformen der Figur 2 realisieren. Ebenso können die zur Ausführungsform der Flg. 4 gezeigten zusätzlichen Anbauten ohne weiteres auch bei den in den Fig. 1 bis 3 gezeigten Ausführungsformen realisieren.

Die Wippe 17 dient bei den hier gezeigten Fahrzeugen 1 der Fig. 1 bis 4 nicht zum Längsverschieben des Fahrzeugschwerpunkts, was zu einem dynamischen Bremsen oder Beschleunigen des Fahrzeugs 1 führt. Vielmehr soll durch Ausbalancieren der Wippe 17 ein statischer bzw. stationärer Zustand herbeigeführt werden, bei dem das Fahrzeug 1 mit konstanter Geschwindigkeit fährt. Zum Beschleunigen des Fahrzeugs 1 kann die Wippe 17 z.B. gegen einen am Fahrgestell 2 ausgebildeten vorderen Anschlag 64 anschlagen. Zum Bremsen des Fahrzeugs 1 kann die Wippe 17 gegen einen hinteren Anschlag 65 verschwenken. Hierdurch lässt sich der Gesamtschwerpunkt, der sich aus den Schwerpunkten des Fahrzeugführers und des Fahrzeugs 1 zusammensetzt, in der Längsrichtung X verschieben. Dies geht damit einher, dass das Fahrgestell 2 um die Raddrehachse 6 verschwenkt. Dies wiederum wird durch die Steuereinrichtung 9 dynamisch durch Beschleunigen bzw. Bremsen der Räder ausgeglichen. Alternativ oder zusätzlich kann der Fahrzeugführer auch an besagter Lenkstange 57 ziehen oder drücken, um direkt ein Verschwenken des Fahrgestells 2 um die Raddrehachse 6 herbeizuführen. Bevorzugt ist der jeweilige Anschlag 64, 65 gedämpft bzw. als Dämpfer ausgestaltet. Beispielsweise kann der jeweilige Anschlag 64, 65 einen Elastomerkörper aufweisen oder durch einen Elastomerkörper gebildet sein.

In den Fig. 1 bis 4 nimmt die Wippe 17 ihre ausbalancierte Neutralstellung ein. Ausgehend von dieser Neutralstellung ist die Wippe 17 um die Wippenschwenkachse 18 in einem Neutralbereich verschwenkbar, ohne dass sie dabei mit den Anschlägen 64, 65 in Kontakt kommt. Besonders effizient ist daher eine Ausführungsform, bei der die Wippe 17 mit Fußstütze 11 und Fahrzeugsitz 10 so um die Wippenschwenkachse 18 am Fahrgestell 2 verschwenkbar gelagert ist, dass ein Verschwenken der Wippe 17 mit Fußstütze 11 und Fahrzeugsitz 10 um die Wippenschwenkachse 18 um kleinere Winkel, die in besagtem Neutralbereich, der die ausbalancierte Neutrallage der Wippe 17 enthält, liegen, keine die Neigung des Fahrgestells 2 verändernde Drehmomentübertragung bewirkt, während ein Verschwenken der Wippe 17 mit Fußstütze 11 und Fahrzeugsitz 10 um die Wippenschwenkachse 18 um größere Winkel, die außerhalb des Neutralbereichs liegen, eine Drehmomentübertragung zur Neigungsverstellung des Fahrgestells 2 bewirkt. Die Neigung des Fahrgestells 2 ist dabei durch den Neigungswinkel zwischen der Fahrgestelllängsrichtung X und der Horizontalen definiert. Bei aktivem Balancemodus des Fahrzeugs 1 führt eine Veränderung der Neigung, also des Neigungswinkels des Fahrgestells 2 zu einem Beschleunigen bei positiver Neigung und zu einem Abbremsen bei negativer Neigung. Das bedeutet, dass der Fahrzeugführer innerhalb des Neutralbereichs mit der Wippe 17 um die Wippenschwenkachse 18 wippen kann, ohne ein Beschleunigen oder Abbremsen des Fahrzeugs 1 zu bewirken. Erst wenn das Wippen Winkelwerte außerhalb des Neutralbereichs erreicht, wirkt sich dies auf die Neigung des Fahrgestells 2 aus und hat eine Beschleunigung oder ein Abbremsen zur Folge.

Gemäß den in den Fig. 1, 3 und 4 gezeigten Ausführungsformen kann das Fahrgestell 2 wenigstens eine Lagerkonsole 66 aufweisen, die sich oberhalb der Raddrehachse 6 nach oben in Richtung zum Fahrzeugsitz 10 erstreckt und an der die Wippe 17 um die Wippenschwenkachse 18 verschwenkbar angeordnet ist. Zweckmäßig kann an jeder Fahrzeugseite je eine solche Lagerkonsole 66 vorgesehen sein. Je nach Positionierung der Wippenschwenkachse 18 kann sich die jeweilige Lagerkonsole 66 in der Höhenrichtung Z beispielsweise gemäß den Fig. 3 und 4 bis zum Fahrzeugsitz 10 erstrecken. Bei der Variante gemäß Fig. 1 ist die Lagerkonsole 66 in der Höhenrichtung Z dagegen nicht so groß dimensioniert.

In der Fahrzeuglängsrichtung X ist die jeweilige Lagerkonsole 66 zweckmäßig etwa mittig oberhalb der Raddrehachse 6 positioniert. Sie kann sich dabei beispielsweise über weniger als 30%, vorzugsweise über weniger als 20% der Fahrzeuglänge 27 in der Fahrzeuglängsrichtung X erstrecken.

Die Lagerkonsole 66 trägt die Lagerung 23 bzw. das jeweilige Lager 32 und ermöglicht die etwa mittige, also quasi zentrale Abstützung der gesamten Gewichtskraft der Wippe 17 bzw. der Einheit 49 am Fahrgestell 2. Besonders vorteilhaft ist eine Ausführungsform, bei der die jeweilige Lagerkonsole 66 wie hier als Vertikalstütze ausgestaltet ist und nur im mittleren Bereich 26 am Fahrgestell 2, vorzugsweise am Untergestell 3 bzw. am Fahrgestellkörper 50 abgestützt bzw. starr befestigt ist.

Als vorteilhaft hat sich eine Variante herausgestellt, bei welcher gemäß Fig. 3 ein vertikaler oberer Abstand 67 zwischen der Wippenschwenkachse 18 und dem Fahrzeugsitz 10 kleiner ist als ein vertikaler unterer Abstand 68 zwischen der Wippenschwenkachse 18 und der Raddrehachse 6. Besonders vorteilhaft kann die Wippenschwenkachse 17 im Bereich einer der Raddrehachse 6 zugewandten Unterseite 69 des Fahrzeugsitzes 10 verlaufen. Mit anderen Worten, gemäß einer bevorzugten Ausführungsform kann vorgesehen sein, dass die Wippe 17 im Bereich einer der Raddrehachse 6 zugewandten Unterseite 6 des Fahrzeugsitzes 10 um die die Wippenschwenkachse 18 verschwenkbar am Fahrgestell 2 angeordnet ist. Somit ist die Wippenschwenkachse 18 relativ weit oberhalb der Raddrehachse 6 positioniert.

## Patentansprüche

1. Dynamisch balancierendes Fahrzeug (1),
- mit einem Fahrgestell (2), das wenigstens zwei mittels Elektromotor (8) angetriebene Räder (5) aufweist, die um eine gemeinsame Raddrehachse (6) drehbar sind,
- mit einem auf dem Fahrgestell (2) angeordneten Fahrzeugsitz (10),
- mit einer Steuereinrichtung (9) zum Ansteuern der Elektromotoren (8) zum Balancieren, Beschleunigen, Bremsen und Lenken des Fahrzeugs (1),
**dadurch gekennzeichnet,**
- **dass** an einer Vorderseite (12) des Fahrgestells (2) eine Fußstütze (11) relativ zum Fahrgestell (2) beweglich angeordnet ist,
- **dass** der Fahrzeugsitz (10) relativ zum Fahrgestell (2) beweglich angeordnet ist,
- **dass** eine Wippe (17) um eine parallel zur Raddrehachse (6) verlaufende Wippenschwenkachse (18) schwenkbar am Fahrgestell (2) angeordnet ist,
- **dass** die Wippe (17) die Fußstütze (11) und den Fahrzeugsitz (10) zum Ausgleich von Drehmomenten um die Wippenschwenkachse (18) koppelt.

2. Fahrzeug nach Anspruch 1,
**dadurch gekennzeichnet,**
**dass** die Wippe (17) mit Fußstütze (11) und Fahrzeugsitz (10) so um die Wippenschwenkachse (18) am Fahrgestell (2) verschwenkbar gelagert ist, dass ein Verschwenken der Wippe (17) mit Fußstütze (11) und Fahrzeugsitz (10) um die Wippenschwenkachse (18) in einem Neutralbereich, der eine ausbalancierte Neutrallage der Wippe (17) enthält, ohne eine die Neigung des Fahrgestells (2) verändernde Drehmomentübertragung erfolgt, während ein Verschwenken der Wippe (17) mit Fußstütze (11) und Fahrzeugsitz (10) um die Wippenschwenkachse (18) außerhalb des Neutralbereichs eine Drehmomentübertragung zur Neigungsverstellung des Fahrgestells (2) bewirkt.

3. Fahrzeug nach Anspruch 2,
**dadurch gekennzeichnet,**
**dass** der Neutralbereich durch Anschläge (64, 65) begrenzt ist, in denen die Wippe (17) zur Drehmomentübertragung mit dem Fahrgestell (2) zusammenwirkt.

4. Fahrzeug nach einem der vorhergehenden Ansprüche,
**dadurch gekennzeichnet,**
**dass** die Wippe (17) um die Wippenschwenkachse (18) antriebslos schwenkbar am Fahrgestell (2) angeordnet ist.

5. Fahrzeug nach einem der vorhergehenden Ansprüche,
**dadurch gekennzeichnet,**
- **dass** das Fahrgestell (2) einen Fahrgestellkörper (50) aufweist, an dem die Räder (5) gelagert sind und an dem der jeweilige Elektromotor (8) Drehmomente zum Antreiben des jeweiligen Rads (6) abstützt,
- **dass** die Wippe (17) relativ zu diesem Fahrgestellkörper (50) um die Wippenschwenkachse (18) verschwenkbar am Fahrgestell (2) angeordnet ist.

6. Fahrzeug nach einem der vorhergehenden Ansprüche,
**dadurch gekennzeichnet,**
**dass** die Wippe (17) über den Fahrzeugsitz (10) und die Fußstütze (11) eingeleitete Vertikalkräfte (21, 22) in der Wippenschwenkachse (18) vertikal am Fahrgestell (2) abstützt.

7. Fahrzeug nach einem der vorhergehenden Ansprüche,
**dadurch gekennzeichnet,**
- **dass** die Wippenschwenkachse (18) oberhalb der Raddrehachse (6) angeordnet ist, und/oder
- **dass** die Wippenschwenkachse (18) in einem mittleren Längsabschnitt (26) des Fahrgestells (2), der sich über maximal ein Drittel der in der Fahrzeuglängsachse (X) verlaufenden Fahrgestelllänge (27) erstreckt, oberhalb der Raddrehachse (6) angeordnet ist, und/oder
- **dass** die Wippenschwenkachse (18) bei horizontal ausgerichtetem Fahrzeug (1) senkrecht oberhalb der Raddrehachse (6) angeordnet ist.

8. Fahrzeug nach einem der vorhergehenden Ansprüche,
**dadurch gekennzeichnet,**
**dass** das Fahrgestell (2) wenigstens eine Lagerkonsole (66) aufweist, die sich oberhalb der Raddrehachse (6) nach oben in Richtung zum Fahrzeugsitz (10) erstreckt und an der die Wippe (17) um die Wippenschwenkachse (18) verschwenkbar angeordnet ist.

9. Fahrzeug nach einem der vorhergehenden Ansprüche,
**dadurch gekennzeichnet,**
**dass** ein vertikaler oberer Abstand (67) zwischen der Wippenschwenkachse (18) und dem Fahrzeugsitz (10) kleiner ist als ein vertikaler unterer Abstand (68) zwischen der Wippenschwenkachse (18) und der Raddrehachse (6).

10. Fahrzeug nach einem der vorhergehenden Ansprüche,
**dadurch gekennzeichnet,**
**dass** die Wippe (17) im Bereich einer der Raddrehachse (6) zugewandten Unterseite (69) des Fahrzeugsitzes (10) um die die Wippenschwenkachse (18) verschwenkbar am Fahrgestell (2) angeordnet ist.

11. Fahrzeug nach einem der vorhergehenden Ansprüche,
**dadurch gekennzeichnet,**
**dass** Wippe (17), Fußstütze (11) und Fahrzeugsitz (10) eine Einheit (49) bilden, die am Fahrgestell (2) um die Wippenschwenkachse (18) schwenkbar angeordnet ist.

12. Fahrzeug nach Anspruch 11,
**dadurch gekennzeichnet,**
**dass** die Wippe (17) mit der Fußstütze (11) und mit dem Fahrzeugsitz (10) starr verbunden ist.

13. Fahrzeug nach einem der vorhergehenden Ansprüche,
**dadurch gekennzeichnet,**
**dass** die Wippe (17) einen Wippenrahmen (31) aufweist, der über wenigstens eine hintere Verbindung (20) mit dem Fahrzeugsitz (10) verbunden ist, über wenigstens eine vordere Verbindung (19) mit der Fußstütze (11) verbunden ist und über wenigstens ein Lager (32) am Fahrgestell (2) um die Wippenschwenkachse (18) schwenkbar gelagert ist.

14. Fahrzeug nach Anspruch 13,
**dadurch gekennzeichnet,**
- **dass** der Wippenrahmen (31) wenigstens einen Horizontalträger (35) aufweist, der direkt oder indirekt mit der Fußstütze (11) verbunden ist,
- **dass** der Wippenrahmen (31) wenigstens einen Vertikalträger (38) aufweist, der oben mit dem Fahrzeugsitz (11) starr verbunden ist und der unten mit dem Horizontalträger (35) starr verbunden ist.

15. Fahrzeug nach einem der vorhergehenden Ansprüche,
**dadurch gekennzeichnet,**
- **dass** der Fahrzeugsitz (10) ein Sitzunterteil (42) aufweist, über das der Fahrzeugsitz (10) verstellbar am Fahrgestell (2) angeordnet ist,
- **dass** der Fahrzeugsitz (10) ein Sitzoberteil (43) aufweist, das auf dem Sitzunterteil (42) in der Fahrzeuglängsachse (X) verschiebbar angeordnet ist,
- **dass** die Wippe (17) mit dem Sitzunterteil (42) gekoppelt ist.
